# EUROPEAN PATENT SPECIFICATION

(11) **EP 2 202 974 B1**
(45) Date of publication and mention of the grant of the patent: **11.09.2019**
(21) Application number: 08841577.3
(22) Date of filing: 13.10.2008
(51) Int. Cl.: H04L 29/06, H04L 12/18, H04N 21/643

(54) **A METHOD, EQUIPMENT AND SYSTEM FOR STARTING A SERVICE OF THE NETWORK TELEVISION**
VERFAHREN, AUSRÜSTUNG UND SYSTEM ZUM STARTEN EINES NETZWERK-TV-DIENSTES
PROCÉDÉ, ÉQUIPEMENT ET SYSTÈME POUR DÉMARRER UN SERVICE DE LA TÉLÉVISION PAR RÉSEAU

(30) Priority: 19.10.2007 CN 200710176122
(43) Date of publication of application: 30.06.2010
(73) Proprietor: Huawei Device Co., Ltd., Dongguan, Guangdong 523808 (CN)
(72) Inventor: FAN, Yunsong, Shenzhen Guangdong 518129 (CN)
(74) Representative: Isarpatent
(86) International application number: PCT/CN2008/072666
(87) International publication number: WO 2009/052734

(56) References cited:
- EP-A2- 1 359 709
- WO-A1-2007/101473
- CN-A- 1 992 735
- CN-A- 101 141 626
- US-A1- 2006 294 555
- FENNER AT&T RESEARCH H HE NORTEL B HABERMAN JHU-APL H SANDICK LITTLE RIVER ELEMENTARY SCHOOL B: "Internet Group Management Protocol (IGMP) / Multicast Listener Discovery (MLD)-Based Multicast Forwarding (IGMP/MLD Proxying); rfc4605.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/, INTERNET ENGINEERING TASK FORCE, IETF, CH, 1 August 2006 (2006-08-01), XP015047370, ISSN: 0000-0003
- SHOAF S ET AL: "IGMP Capabilities in Broadband Network Architectures", WHITEPAPER JUNIPER NETWORKS, XX, XX, 1 March 2005 (2005-03-01), pages 1-25, XP002999116,

## Description

### FIELD OF THE TECHNOLOGY

The present invention relates to the field of image communication, and more particularly to a method, a device, and a system for starting a service of an Internet Protocol Television (IPTV).

### BACKGROUND OF THE INVENTION

An Internet Protocol Television (IPTV), also known as interactive network television, is a technology using infrastructures for broadband Internet and broadband accessing, and adopting a set-top-box (STB) or other digital equipment with video encoding/decoding capabilities as a terminal to provide various digital media services and value-added services thereof including television programs over IP.

However, the IPTV services cannot be started as quickly as analog televisions that broadcast television programs immediately once being powered on and started. Generally, the IPTV service starting process in the prior art includes the following five procedures:
A: an initialization procedure, in which the terminal boots up the system and loads associated applications;
B: a network access procedure, in which the terminal completes network access authentication and obtains a network IP address;
C: a service access procedure, in which the terminal completes service authentication;
D: a program acquisition procedure, in which the terminal downloads channel program information; and
E: a service broadcast procedure, in which the terminal requests to join in and acquires corresponding channels for video broadcasting,

In the above procedures, A depends on the design of the terminal system, and generally requires about 10 seconds; B depends on network conditions, and generally requires about 5 seconds; C depends on the design of the service system, which may involve scheduling access, and generally require about 3 seconds; D depends on daemon interaction, and generally requires about 5 seconds; and E depends on the program provision mode and network conditions, and generally requires about 1 to 3 seconds, which is uncertain. Therefore, the total overhead is around 25 seconds. As seen from the above analysis, the IPTV service starting process in the prior art cannot be accomplished until the IP network access authentication and service authentication are completed, thereby affecting the startup speed, so that a user has to wait for a long time before the startup of the IPTV services.

EP 1359709 A2 provides a method for facilitating processing of IGMP messages in an accelerated manner. In accordance with such method, an operation is performed for receiving an IGMP Membership Report designating a requested multipoint leaf connection and an operation is performed for assessing entries in a reference table identifying active multicast sessions for determining whether a multicast stream designated in the IGMP Membership Report is already active. In response to determining that the multicast stream is active via a different host than the host designated in the IGMP Membership Report; an entry is created in a reference table identifying active multicast sessions for identifying the host designated in the IGMP Membership Report as an alternate host for the multicast stream designated in the IGMP Membership Report.; In response to determining that implementation of the requested multipoint leaf connection is required and that required network resources are unavailable, an operation is performed for determining whether a host designated in the IGMP Membership Report is a sole member of at least one other multicast session. A multicast leaf connection implementation process is performed for implementing the requested multipoint leaf connection in response to determining that required network resources are available.

### SUMMARY OF THE INVENTION

Accordingly, the present invention is directed to a method, terminal and system according to the appended independent claims for starting an IPTV service, which are applicable to solve the problem in the prior art that it takes a long time to start IPTV services.

In an embodiment, the present invention provides a method for starting an IPTV service, which includes the following steps.

Before the terminal accesses an IP network to obtain a valid allocated network IP address for the terminal, an Internet Group Management Protocol (IGMP)-based join request message carrying multicast program channel information is sent by the terminal via a physical link connection established between the terminal and a Layer-2 network access equipment, wherein the Layer-2 network access equipment supports the processing of IGMP packets and the forwarding of multicast data.

Then, before the terminal accesses an IP network, a media stream of a multicast group which the terminal requests to join in is acquired by the terminal via the physical link connection.

In an embodiment, the present invention provides an IPTV terminal, which includes an interface module and a startup module.

The interface module is adapted to establish a physical link connection between the terminal and a Layer-2 network access equipment through link association, wherein the Layer-2 network access equipment supports the processing of IGMP packets and the forwarding of multicast data.

The startup module is adapted to send, before the terminal accesses an IP network to obtain a valid allocated network IP address for the terminal, an IGMP-based join request message carrying multicast program channel information, via the physical link connection established by the interface module, and receive, through the interface module before the terminal accesses the IP network, a media stream of a multicast group, which the terminal requests to join in, via the physical link connection.

In an embodiment, the present invention provides a system for starting an IPTV service, which includes a terminal, a program source server, and Layer-2 network access equipment.

The terminal is adapted to establish a physical link connection through link association, send, before the terminal accesses an IP network to obtain the valid allocated network IP address for the terminal, an IGMP-based join request message carrying multicast program channel information, via the physical link connection, and receive, via the physical link connection before the terminal (200) accesses the IP network, a media stream of a multicast group, which the terminal requests to join in.

The program source server is adapted to store media data of video services.

As for the Layer-2 network access equipment, the terminal establishes the physical link connection with the Layer-2 network access equipment via a network port. The Layer-2 network access equipment is adapted to replicate, according to the IGMP-based join request message, the media stream of the multicast group which the terminal requests to join in, from the media data of the video services, and send the media stream to the terminal, wherein the Layer-2 network access equipment supports the processing of IGMP packets and the forwarding of multicast data.

In the embodiments of the present invention, before the terminal accesses an IP network, the terminal sends an IGMP-based join request message via a physical link connection, and acquires a media stream of a multicast group which the terminal requests to join in, so as to realize the startup of the IPTV services. Therefore, the present invention accelerates the IPTV service startup speed, and shortens the time spent on waiting for the startup of the IPTV services.

The technical solutions of the present invention are further described in detail below with reference to the embodiments and the accompanying drawings.

### BRIEF DESCRIPTION OF THE DRAWINGS

FIG. 1 is a flow chart of a method for starting an IPTV service according to a first embodiment of the present invention;
FIG. 2 is a flow chart of a method for starting an IPTV service according to a second embodiment of the present invention;
FIG. 3 is a schematic structural view of an IPTV terminal according to a first embodiment of the present invention;
FIG. 4 is a schematic structural view of an IPTV terminal according to a second embodiment of the present invention;
FIG. 5 is a schematic structural view of an IPTV terminal according to a third embodiment of the present invention;
FIG. 6 is a schematic structural view of a system for starting an IPTV service according to a first embodiment of the present invention; and
FIG. 7 is a schematic structural view of a system for starting an IPTV service according to a second embodiment of the present invention.

### DETAILED DESCRIPTION OF THE EMBODIMENTS

A first embodiment of a method for starting an IPTV service is illustrated below.

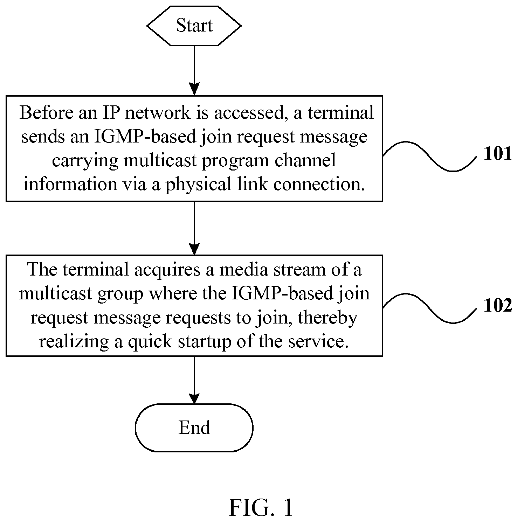

FIG. 1 is a flow chart of a method for starting an IPTV service according to a first embodiment of the present invention. The method according to this embodiment includes the following steps.

In step 101, before the terminal accesses an IP network, a terminal sends an IGMP-based join request message carrying multicast program channel information, via a physical link connection.

Specifically, in this step, before the terminal accesses the IP network, the terminal may send an IGMP-based join request message to Layer-2 network access equipment at the network side according to multicast program channel information (a multicast program channel list) having authorization properties pre-stored in the terminal, and request to join in a certain multicast group having authorization properties. The IGMP-based join request message carries the multicast program channel information having authorization properties. Alternatively, the terminal may also first acquire default multicast program channel information according to default channels pre-stored in the terminal, and then send an IGMP-based join request message to the Layer-2 network access equipment at the network side according to the default multicast program channel information, so as to request to join in a certain default multicast group (a public multicast group). The IGMP-based join request message carries the default multicast program channel information.

The terminal may be an STB and may also be other equipment integrated with functions of an STB, for example, a computer or an integrated digital television (iDTV) integrated with functions of an STB. The terminal stores program channel information having authorization properties. Before the terminal accesses an IP network, the terminal sends an IGMP-based join request message to the Layer-2 network access equipment simply via a physical link according to the channel information, and requests to join in a certain multicast group.

The Layer-2 network access equipment may be a digital subscriber line access multiplexer (DSLAM). In addition, the Layer-2 network access equipment supports the processing of IGMP packets and the forwarding of multicast data.

A prerequisite for establishing a physical link connection is network port communication. Therefore, the physical link connection may be established during an initialization procedure of the terminal or after the initialization procedure of the terminal. The initialization procedure of the terminal includes booting a terminal system and loading associated applications, that is, the terminal accomplishes the initialization of a memory, cache memory, and flash memory of the terminal, fulfils the driving of associated hardware peripherals such as network ports and other equipment, completes network configuration, and so on. During the initialization procedure of the terminal, the physical link connection can be established, as long as the network ports are driven to realize the network port communication.

In step 102, the terminal acquires a media stream of a multicast group which the IGMP-based join request message requests to join in.

Specifically, in this step, the terminal acquires the media stream, replicated by the Layer-2 network access equipment according to the IGMP-based join request message, of the multicast group which the terminal requests to join in, thereby realizing a quick startup of the service.

In view of the above, the terminal may directly acquire the media stream, delivered by the Layer-2 network access equipment, of the multicast group which the terminal requests to join in, without acquiring a network IP address (that is, before an IP network access is accomplished).

In this embodiment, before the terminal accesses an IP network, the terminal sends an IGMP-based join request message to the Layer-2 network access equipment via a physical link connection, and acquires a media stream of a multicast group which the request message requests to join in, so as to realize quick startup of the service. Therefore, this embodiment accelerates the IPTV service startup speed, and shortens the time spent on waiting for the startup of the IPTV services.

A second embodiment of the method for starting an IPTV service is illustrated below.

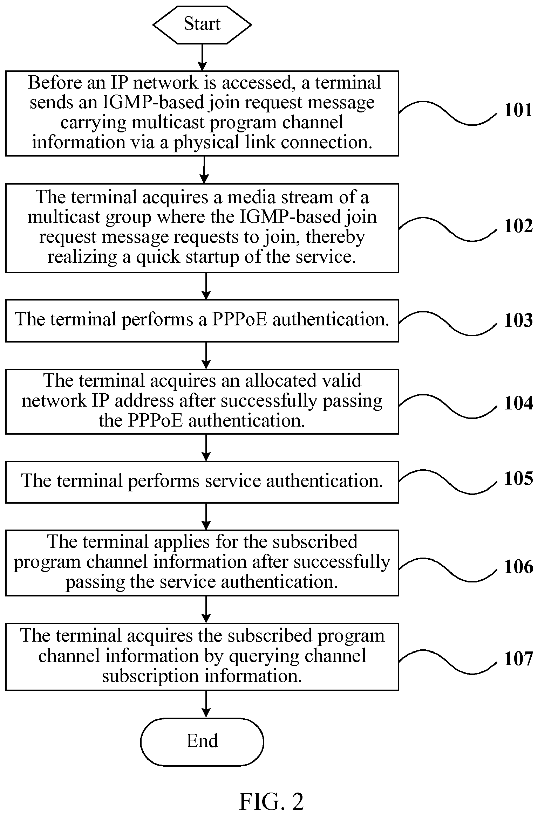

FIG. 2 is a flow chart of a method for starting an IPTV service according to a second embodiment of the present invention. Referring to FIG. 2, in order to enable an IPTV terminal to further acquire the subscribed multicast data and on-demand data, as compared with the first embodiment, the method in this embodiment further includes the following steps after step 102.

In step 103, the terminal performs access authentication based on Point to Point Protocol over Ethernet (PPPoE).

Specifically, the terminal performs PPPoE authentication through interaction with an access authentication device. The access authentication device may be a broadband remote access server (BRAS) or a remote authentication dial in user service (RADIUS) authentication server.

In step 104, the terminal acquires an allocated valid network IP address after successfully passing the PPPoE authentication.

Specifically, the terminal acquires a network IP address allocated by the access authentication device after successfully passing the PPPoE authentication.

The PPPoE is a protocol for transmitting PPP packets over Ethernet, and has been widely applied in ADSL access authentication and data transmission currently. The PPPoE dial-up authentication generally adopts a dynamic allocation mode of IP addresses. Specifically, after the terminal dials a number, the BRAS automatically allocates an IP address to the terminal. The PPPoE supports ensuring of the quality of service (QoS), and facilitates the implementation of real-time traffic control on the terminal. The PPPoE also supports security authentication based on "user name and password" of the terminal, so as to effectively identify the validity of the access terminal.

In step 105, the terminal performs service authentication.

Specifically, the terminal performs service authentication through interaction with a service management device. The service management device may be an IPTV middleware.

In step 106, the terminal applies for the subscribed program channel information after successfully passing the service authentication.

Specifically, the terminal applies for the subscribed program channel information from the service management device after successfully passing the service authentication.

In step 107, the terminal acquires the subscribed program channel information by querying for channel subscription information.

Specifically, the terminal acquires the subscribed program channel information after the service management device queries for channel subscription information of the end user in a Business and Operation Support System (BOSS).

In this embodiment, after acquiring the multicast data, the terminal further acquires the network IP address and the subscribed program channel information, so as to realize multicast and on-demand services.

The method for starting an IPTV service of this embodiment may further include a hibernation procedure of the terminal. After being awakened from the hibernation state, the terminal directly sends an IGMP-based join request message to the Layer-2 network access equipment according to the subscribed program channel information acquired before the hibernation. The Layer-2 network access equipment then replicates, according to the IGMP-based join request message, the media stream of the multicast group which the terminal requests to join in, and sends the media stream to the terminal. Thus, the terminal acquires the media stream, and realizes the rapid resuming of the service.

An embodiment of a device for starting an IPTV service is illustrated below.

The device for starting an IPTV service of this embodiment includes a request module and an acquisition module. The request module is adapted to send, before the terminal accesses an IP network, an IGMP-based join request message carrying multicast program channel information, via a physical link connection. The acquisition module is adapted to acquire a media stream, replicated according to the IGMP-based join request message, of a multicast group which the IGMP-based join request message requests to join in.

In this embodiment, before the terminal accesses an IP network, the request module sends an IGMP-based join request message via a physical link, which enables the acquisition module to acquire a media stream, so as to realize the quick startup of the service. Therefore, this embodiment accelerates the IPTV service startup speed, and shortens the time spent on waiting for the startup of the IPTV services.

In addition, the device of this embodiment may further include an initialization module adapted to perform an initialization procedure. The initialization procedure includes establishing the physical link connection through link association.

A first embodiment of an IPTV terminal is illustrated below.

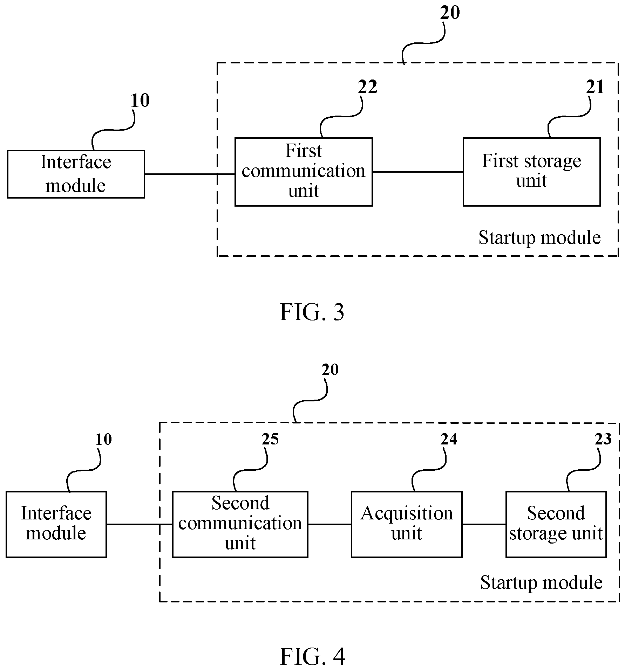

FIG. 3 is a schematic structural view of an IPTV terminal according to a first embodiment of the present invention. Referring to FIG. 3, the IPTV terminal of this embodiment includes an interface module 10 and a startup module 20 connected with each other. The interface module 10 is adapted to establish a physical link connection through link association. The startup module 20 is adapted to send, before the terminal accesses an IP network, an IGMP-based join request message carrying multicast program channel information, via the physical link connection established by the interface module 10, and receive a delivered media stream through the interface module 10.

In this embodiment, the startup module 20 may further include a first storage unit 21 and a first communication unit 22 connected with each other. The first storage unit 21 is adapted to store multicast program channel information having authorization properties. The first communication unit 22 is adapted to send, before the terminal accesses the IP network, the IGMP-based join request message carrying the multicast program channel information, via the physical link connection established by the interface module 10 and according to the multicast program channel information stored in the first storage unit 21, and receive the media stream through the interface module 10.

In this embodiment, before the terminal accesses an IP network, the first communication unit of the startup module sends the IGMP-based join request message to the Layer-2 network access equipment simply via the physical link according to the multicast program channel information having authorization properties stored in the first storage unit, and acquires a media stream of a multicast group which has authorization properties and which the request message requests to join in, so as to realize the quick startup of the service. Therefore, this embodiment accelerates the IPTV service startup speed, and shortens the time spent on waiting for the startup of the IPTV services.

A second embodiment of the IPTV terminal is illustrated below.

FIG. 4 is a schematic structural view of an IPTV terminal according to a second embodiment of the present invention. Referring to FIG. 4, as compared with the first embodiment of the IPTV terminal, the startup module 20 of this embodiment includes a second storage unit 23, an acquisition unit 24, and a second communication unit 25, where the second storage unit 23, the acquisition unit 24 and the second communication unit 25 are connected in sequence. The second storage unit 23 is adapted to store default channels. The acquisition unit 24 is adapted to acquire default multicast program channel information according to the default channels stored in the second storage unit 23. The second communication unit 25 is adapted to send, before the terminal accesses an IP network, an IGMP-based join request message carrying the default multicast program channel information, via the physical link connection established by the interface module 10 and according to the default multicast program channel information acquired by the acquisition unit 24, and receive a media stream through the interface module 10.

In this embodiment, before the terminal accesses an IP network, the acquisition module of the startup module first acquires default multicast program channel information according to default channels stored in the second storage unit. Then, the second communication unit sends an IGMP-based join request message to the Layer-2 network access equipment simply via a physical link according to the default multicast program channel information, and acquires a media stream of a default multicast group which the request message requests to join in, so as to realize the quick startup of the service. Therefore, this embodiment accelerates the IPTV service startup speed, and shortens the time spent on waiting for the startup of the IPTV services.

A third embodiment of the IPTV terminal is illustrated below.

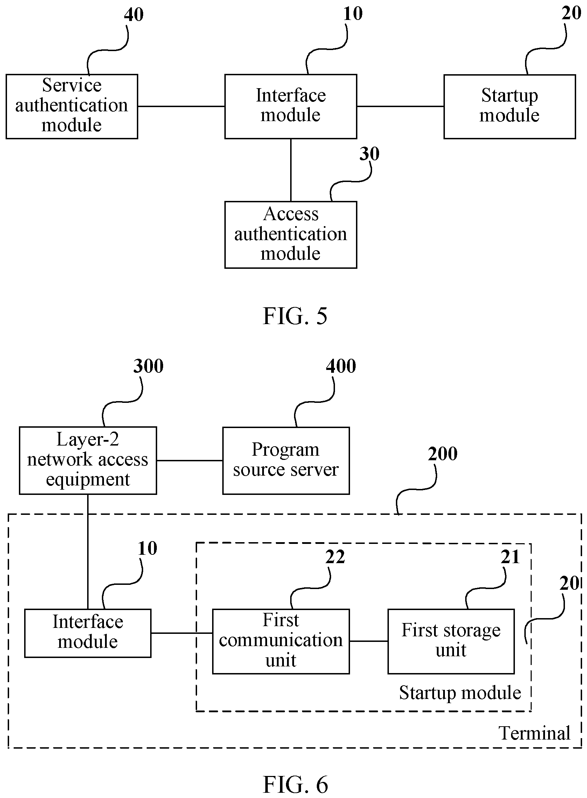

FIG. 5 is a schematic structural view of an IPTV terminal according to a third embodiment of the present invention. Referring to FIG. 5, as compared with the first and second embodiments of the IPTV terminal, the IPTV terminal of this embodiment further includes an access authentication module 30 and a service authentication module 40. The access authentication module 30 is adapted to complete PPPoE authentication on the terminal, by interacting with an access authentication device through the interface module 10, and acquire an allocated network IP address through the interface module 10 after the terminal successfully passes the PPPoE authentication. The service authentication module 40 is adapted to complete service authentication on the terminal, by interacting with a service management device through the interface module 10, and acquire subscribed program channel information, by querying channel subscription information through the interface module 10, after the terminal successfully passes the service authentication.

In this embodiment, after the startup module acquires the multicast data to start the multicast service for the terminal, the access authentication module and the service authentication module may further acquire the delivered network IP address and the program channel information subscribed by the end user respectively, so as to enable the terminal to realize the multicast and on-demand services.

A first embodiment of a system for starting an IPTV service is illustrated below.

FIG. 6 is a schematic structural view of a system for starting an IPTV service according to a first embodiment of the present invention. Referring to FIG. 6, the system of this embodiment includes a terminal 200, Layer-2 network access equipment 300, and a program source server 400, where the terminal 200, the Layer-2 network access equipment 300 and the program source server 400 are connected in sequence. The terminal 200 is adapted to establish a physical link connection between the terminal 200 and the Layer-2 network access equipment 300 through link association, send, before the terminal accesses an IP network, an IGMP-based join request message carrying multicast program channel information to the Layer-2 network access equipment 300, via the physical link connection, and receive, via the physical link connection, a media stream of a multicast group which the IGMP-based join request message requests to join in. The program source server 400 is adapted to store media data of video services. As for the Layer-2 network access equipment 300, the terminal 200 establishes the physical link connection with the Layer-2 network access equipment 300 via a network port. The Layer-2 network access equipment 300 is adapted to replicate, according to the IGMP-based join request message, the media stream of the multicast group which the terminal 200 requests to join in, from the media data of the video services stored in the program source server 400, and send the media stream to the terminal 200.

The Layer-2 network access equipment 300 supports IGMP management and multicast replication. After the terminal 200 sends the IGMP-based join request message to the Layer-2 network access equipment 300, the Layer-2 network access equipment 300 normally detects the request message, and replicates, according to the multicast IGMP-based join request message, the media stream of the multicast group which the terminal 200 requests to join in, from the media streams of the video services stored in the program source server 400.

In this embodiment, the terminal 200 includes an interface module 10 and a startup module 20 connected with each other. The interface module 10 is adapted to establish a physical link connection between the terminal and the Layer-2 network access equipment through link association. The startup module 20 is adapted to send, before the terminal accesses an IP network, an IGMP-based join request message carrying multicast program channel information to the Layer-2 network access equipment, via the physical link connection established by the interface module 10, and receive, through the interface module 10, a media stream, delivered by the Layer-2 network access equipment 300, of a multicast group which the IGMP-based join request message requests to join in.

In this embodiment, the startup module 20 of the terminal 200 may further include a first storage unit 21 and a first communication unit 22 connected with each other. The first storage unit 21 is adapted to store multicast program channel information having authorization properties. The first communication unit 22 is adapted to send, before the terminal accesses the IP network, the IGMP-based join request message carrying the multicast program channel information to the Layer-2 network access equipment 300, via the physical link connection established by the interface module 10 and according to the multicast program channel information stored in the first storage unit 21, and receive, through the interface module 10, the media stream of the multicast group which the IGMP-based join request message requests to join in.

Optionally, in this embodiment, the startup module 20 may further include a second storage unit (not shown), an acquisition unit (not shown), and a second communication unit (not shown), where the second storage unit, the acquisition unit, and the second communication unit are connected in sequence. The second storage unit is adapted to store default channels. The acquisition unit is adapted to acquire default multicast program channel information according to the default channels stored in the second storage unit. The second communication unit is adapted to send, before the terminal accesses an IP network, an IGMP-based join request message carrying the default multicast program channel information, via the physical link connection established by the interface module 10 and according to the default multicast program channel information acquired by the acquisition unit, and receive, through the interface module 10, a media stream of a multicast group which the IGMP-based join request message requests to join in.

In this embodiment, before the terminal accesses an IP network, the terminal sends an IGMP-based join request message to the Layer-2 network access equipment simply via a physical link. Then, the Layer-2 network access equipment replicates, according to the IGMP-based join request message, a media stream of a multicast group which the terminal requests to join in, and enables the terminal to acquire the media stream, so as to realize the startup of the service for the terminal. Therefore, this embodiment accelerates the IPTV service startup speed, and shortens the time spent on waiting for the startup of the IPTV services.

A second embodiment of the system for starting an IPTV service is illustrated below.

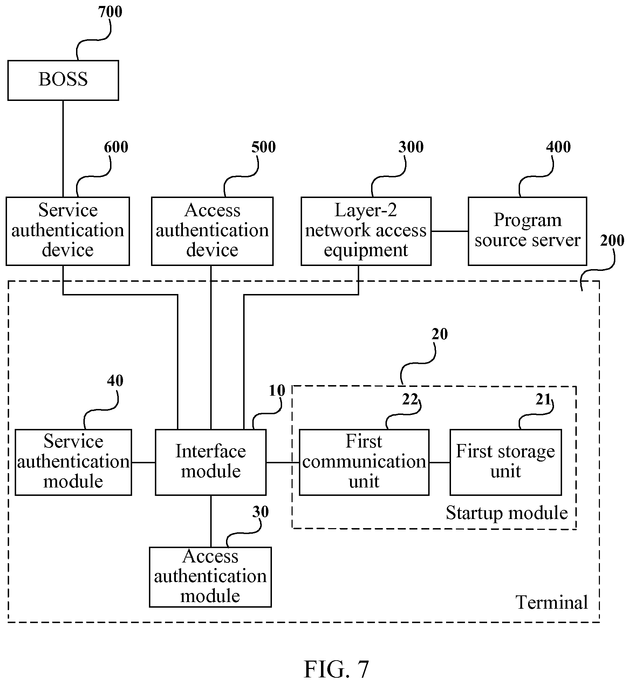

FIG. 7 is a schematic structural view of a system for starting an IPTV service according to a second embodiment of the present invention. As compared with the first embodiment of the system, the terminal 200 in this embodiment further includes an access authentication module 30 and a service authentication module 40. The access authentication module 30 is adapted to complete PPPoE authentication on the terminal 200, by interacting with an access authentication device through the interface module 10, and acquire an allocated network IP address through the interface module 10 after the terminal 200 successfully passes the PPPoE authentication. The service authentication module 40 is adapted to complete service authentication on the terminal 200, by interacting with a service management device through the interface module 10, and acquire subscribed program channel information through the interface module 10 after the terminal 200 successfully passes the service authentication.

The system for starting an IPTV service of this embodiment may further include an access authentication device 500, a BOSS 700, and a service authentication device 600. The access authentication device 500 is adapted to complete access authentication on the terminal 200, by interacting with the access authentication module 30 through the interface module 10, and allocate a network IP address to the terminal 200 after the terminal 200 successfully passes the access authentication. The BOSS 700 is adapted to store information associated with programs subscribed by the terminal 200. The service authentication device 600 is adapted to complete service authentication on the terminal 200, by interacting with the service authentication module 40 through the interface module 10, and, after the terminal 200 successfully passes the service authentication, return the subscribed program channel information to the terminal 200, according to the information which is associated with the programs subscribed by the terminal 200 and is stored in the BOSS 700.

In this embodiment, after obtaining the multicast data to start the multicast service, the terminal further acquires the network IP address delivered by the access authentication device and the program channel information which is subscribed by the end user and returned by the service authentication device, so as to realize the multicast and on-demand services.

Persons of ordinary skill in the art should understand that, all or a part of the steps of the method according to the embodiments of the present invention may be implemented by a program instructing relevant hardware. The program may be stored in a computer readable storage medium. When the program is executed, the steps of the method according to the embodiments of the present invention are performed. The storage medium may be any medium capable of storing program codes such as a ROM, a RAM, a magnetic disk, or an optical disk.

Finally, it should be noted that, the above embodiments are merely provided for describing the technical solutions of the present invention, but not intended to limit the present invention. It should be understood by persons of ordinary skill in the art that, although the present invention has been described in detail with reference to the foregoing embodiments, modifications can be made to the technical solutions described in the foregoing embodiments, or equivalent replacements can be made to some technical features in the technical solutions.

## Claims

1. A method for starting an Internet Protocol Television, IPTV, service, comprising:
sending (101), by a terminal, an Internet Group Management Protocol-based, IGMP-based, join request message carrying multicast program channel information, via a physical link connection established between the terminal and a Layer-2 network access equipment, before the terminal accesses an IP network to obtain a valid allocated network IP address for the terminal, wherein the Layer-2 network access equipment supports the processing of IGMP packets and the forwarding of multicast data; and
acquiring (102), by the terminal before the terminal accesses the IP network, a media stream of a multicast group which the terminal requests to join in via the physical link connection.

2. The method for starting an IPTV service according to claim 1, further comprising:
performing, by the terminal, an initialization procedure before the sending the join request message, wherein the initialization procedure comprises establishing the physical link connection through link association.

3. The method for starting an IPTV service according to claim 1 or 2, wherein the multicast program channel information is pre-stored multicast program channel information having authorization properties in the terminal.

4. The method for starting an IPTV service according to claim 1 or 2, wherein the multicast program channel information is acquired through default channels pre-stored in the terminal.

5. An Internet Protocol Television IPTV terminal, **characterized by** comprising:
an interface module (10), adapted to establish a physical link connection between the terminal and a Layer-2 network access equipment through link association, wherein the Layer-2 network access equipment supports the processing of IGMP packets and the forwarding of multicast data; and
a startup module (20), adapted to send, before the terminal accesses an IP network to obtain a valid allocated network IP address for the terminal, an Internet Group Management Protocol-based, IGMP-based, join request message carrying multicast program channel information, via the physical link connection established by the interface module (10), and receive, through the interface module (10) before the terminal accesses the IP network, a media stream of a multicast group, which the terminal requests to join in, via the physical link connection.

6. The IPTV terminal according to claim 5, wherein the startup module (20) further comprises:
a first storage unit (21), adapted to store multicast program channel information having authorization properties; and
a first communication unit (22), adapted to send, before the terminal accesses the IP network to obtain the valid allocated network IP address for the terminal, the IGMP-based join request message carrying the multicast program channel information, via the physical link connection established by the interface module (10) and according to the multicast program channel information stored in the first storage unit (21), and receive, through the interface module (10) before the terminal accesses the IP network, the media stream of the multicast group, which the terminal requests to join in.

7. The IPTV terminal according to claim 5, wherein the startup module (10) further comprises:
a second storage unit (23), adapted to store default channels;
an acquisition unit (24), adapted to acquire default multicast program channel information according to the default channels; and
a second communication unit (25), adapted to send, before the terminal accesses the IP network to obtain the valid allocated network IP address for the terminal, the IGMP-based join request message carrying the multicast program channel information, via the physical link connection established by the interface module (10) and according to the multicast program channel information acquired by the acquisition unit (24), and receive, through the interface module (10) before the terminal accesses the IP network, the media stream of the multicast group, which the terminal requests to join in.

8. A system for starting an Internet Protocol Television, IPTV, service, **characterized by** comprising:
a terminal (200), adapted to establish a physical link connection through link association, send, before the terminal (200) accesses an IP network to obtain the valid allocated network IP address for the terminal, an Internet Group Management Protocol-based, IGMP-based join request message carrying multicast program channel information, via the physical link connection, and receive, via the physical link connection before the terminal (200) accesses the IP network, a media stream of a multicast group, which the terminal (200) requests to join in;
a program source server (400), adapted to store media data of video services; and
a Layer-2 network access equipment (300), wherein the terminal (200) is configured to establish the physical link connection with the Layer-2 network access equipment (300) via a network port, and the Layer-2 network access equipment (300) is adapted to replicate, according to the IGMP-based join request message, the media stream of the multicast group which the terminal requests to join in, from the media data of the video services, and send the media stream to the terminal (200), wherein the Layer-2 network access equipment (300) supports the processing of IGMP packets and the forwarding of multicast data.

9. The system for starting an IPTV service according to claim 8, wherein the terminal (200) further comprises:
an interface module (10), adapted to establish the physical link connection between the terminal (200) and the Layer-2 network access equipment (300) through link association; and
a startup module (20), adapted to send, before the terminal (200) accesses the IP network to obtain the valid allocated network IP address for the terminal, the IGMP-based join request message carrying the multicast program channel information to the Layer-2 network access equipment (300), via the physical link connection established by the interface module (10), and receive, through the interface module (100) before the terminal accesses the IP network, the media stream of the multicast group, which the terminal (200) requests to join in.

## Patentansprüche

1. Verfahren zum Starten eines "Internet Protocol Television"-IPTV-Dienstes, umfassend:
Senden (101), durch ein Endgerät, einer "Internet Group Management Protocol"-basierten, IGMP-basierten, Beitrittsanfragenachricht, die eine Multicast-Programmkanalinformation enthält, über eine physikalische Linkverbindung, die zwischen dem Endgerät und einer Schicht-2-Netzwerkzugangsvorrichtung hergestellt wird, bevor das Endgerät auf ein IP-Netzwerk zugreift, um eine gültige zugewiesene Netzwerk-IP-Adresse für das Endgerät zu erhalten, wobei die Schicht-2-Netzwerkzugangsvorrichtung die Verarbeitung von IGMP-Paketen und die Weiterleitung von Multicast-Daten unterstützt; und
Erfassen (102), durch das Endgerät, bevor das Endgerät auf das IP-Netzwerk zugreift, eines Medienstroms einer Multicast-Gruppe, der das Endgerät beizutreten verlangt, über die physikalische Linkverbindung.

2. Verfahren zum Starten eines IPTV-Dienstes nach Anspruch 1, ferner umfassend:
Durchführen, durch das Endgerät, einer Initialisierungsprozedur vor dem Senden der Beitrittsanfragenachricht, wobei die Initialisierungsprozedur das Herstellen der physikalischen Linkverbindung durch Linkverknüpfung umfasst.

3. Verfahren zum Starten eines IPTV-Dienstes nach Anspruch 1 oder 2, wobei die Multicast-Programmkanalinformation eine vorgespeicherte Multicast-Programmkanalinformation ist, die Autorisierungseigenschaften in dem Endgerät aufweist.

4. Verfahren zum Starten eines IPTV-Dienstes nach Anspruch 1 oder 2, wobei die Multicast-Programmkanalinformation durch Standardkanäle erfasst wird, die in dem Endgerät vorgespeichert sind.

5. "Internet Protocol Television"-IPTV-Endgerät, **dadurch gekennzeichnet, dass** es umfasst:
ein Schnittstellenmodul (10), das dafür eingerichtet ist, eine physikalische Linkverbindung zwischen dem Endgerät und einer Schicht-2-Netzwerkzugangsvorrichtung durch Linkverknüpfung herzustellen, wobei die Schicht-2-Netzwerkzugangsvorrichtung die Verarbeitung von IGMP-Paketen und die Weiterleitung von Multicast-Daten unterstützt; und
ein Startmodul (20), das dafür eingerichtet ist, bevor das Endgerät auf ein IP-Netzwerk zugreift, um eine gültige zugewiesene Netzwerk-IP-Adresse für das Endgerät zu erhalten, eine "Internet Group Management Protocol"-basierte, IGMP-basierte, Beitrittsanfragenachricht, die eine Multicast-Programmkanalinformation enthält, über die physikalische Linkverbindung zu senden, die durch das Schnittstellenmodul (10) hergestellt wird, und durch das Schnittstellenmodul (10), bevor das Endgerät auf das IP-Netzwerk zugreift, über die physikalische Linkverbindung einen Medienstrom einer Multicast-Gruppe zu empfangen, der das Endgerät beizutreten verlangt.

6. IPTV-Endgerät nach Anspruch 5, wobei das Startmodul (20) ferner umfasst:
eine erste Speichereinheit (21), die dafür eingerichtet ist, eine Multicast-Programmkanalinformation, die Autorisierungseigenschaften aufweist, zu speichern; und
eine erste Kommunikationseinheit (22), die dafür eingerichtet ist, bevor das Endgerät auf das IP-Netzwerk zugreift, um die gültige zugewiesene Netzwerk-IP-Adresse für das Endgerät zu halten, die IGMP-basierte Beitrittsanfragenachricht, welche die Multicast-Programmkanalinformation enthält, über die durch das Schnittstellenmodul (10) hergestellte physikalische Linkverbindung und gemäß der in der ersten Speichereinheit (21) gespeicherten Multicast-Programmkanalinformation, zu senden, und durch das Schnittstellenmodul (10), bevor das Endgerät auf das IP-Netzwerk zugreift, den Medienstrom der Multicast-Gruppe zu empfangen, der das Endgerät beizutreten verlangt.

7. IPTV-Endgerät nach Anspruch 5, wobei das Startmodul (10) ferner umfasst:
eine zweite Speichereinheit (23), die dafür eingerichtet ist, Standardkanäle zu speichern;
eine Erfassungseinheit (24), die dafür eingerichtet ist, eine Standard-Multicast-Programmkanalinformation gemäß den Standardkanälen zu erfassen; und
eine zweite Kommunikationseinheit (25), die dafür eingerichtet ist, bevor das Endgerät auf das IP-Netzwerk zugreift, um die gültige zugewiesene Netzwerk-IP-Adresse für das Endgerät zu erhalten, die IGMP-basierte Beitrittsanfragenachricht, welche die Multicast-Programmkanalinformation enthält, über die durch das Schnittstellenmodul (10) hergestellte physikalische Linkverbindung und gemäß der durch die Erfassungseinheit (24) erfassten Multicast-Programmkanalinformation zu senden, und durch das Schnittstellenmodul (10), bevor das Endgerät auf das IP-Netzwerk zugreift, den Medienstrom der Multicast-Gruppe zu empfangen, der das Endgerät beizutreten verlangt.

8. System zum Starten eines "Internet Protocol Television"-IPTV-Dienstes, **dadurch gekennzeichnet, dass** es umfasst:
ein Endgerät (200), das dafür eingerichtet ist, eine physikalische Linkverbindung durch Linkverknüpfung herzustellen, bevor das Endgerät (200) auf ein IP-Netzwerk zugreift, um die gültige zugewiesene Netzwerk-IP-Adresse für das Endgerät zu erhalten, eine "Internet Group Management Protocol"-basierte, IGMP-basierte Beitrittsanfragenachricht, die eine Multicast-Programmkanalinformation enthält, über die physikalische Linkverbindung zu senden, und über die physikalische Linkverbindung, bevor das Endgerät (200) auf das IP-Netzwerk zugreift, einen Medienstrom einer Multicast-Gruppe zu empfangen, der das Endgerät (200) beizutreten verlangt;
einen Programm-Quellserver (400), der dafür eingerichtet ist, Mediendaten von Videodiensten zu speichern; und
eine Schicht-2-Netzwerkzugangsvorrichtung (300), wobei das Endgerät (200) dafür ausgelegt ist, die physikalische Linkverbindung mit der Schicht-2-Netzwerkzugangsvorrichtung (300) über einen Netzwerkport herzustellen, und wobei die Schicht-2-Netzwerkzugangsvorrichtung (300) dafür eingerichtet ist, gemäß der IGMP-basierten Beitrittsanfragenachricht den Medienstrom der Multicast-Gruppe, der das Endgerät beizutreten verlangt, aus den Mediendaten der Videodienste zu reproduzieren, und den Medienstrom an das Endgerät (200) zu senden, wobei die Schicht-2-Netzwerkzugangsvorrichtung (300) die Verarbeitung von IGMP-Paketen und die Weiterleitung von Multicast-Daten unterstützt.

9. System zum Starten eines IPTV-Dienstes nach Anspruch 8, wobei das Endgerät (200) ferner umfasst:
ein Schnittstellenmodul (10), das dafür eingerichtet ist, die physikalische Linkverbindung zwischen dem Endgerät (200) und der Schicht-2-Netzwerkzugangsvorrichtung (300) durch Linkverknüpfung herzustellen; und
ein Startmodul (20), das dafür eingerichtet ist, bevor das Endgerät (200) auf das IP-Netzwerk zugreift, um die gültige zugewiesene Netzwerk-IP-Adresse für das Endgerät zu erhalten, die IGMP-basierte Beitrittsanfragenachricht, welche die Multicast-Programmkanalinformation enthält, über die durch das Schnittstellenmodul (10) hergestellte physikalische Linkverbindung an die Schicht-2-Netzwerkzugangsvorrichtung (300) zu senden, und durch das Schnittstellenmodul (100), bevor das Endgerät auf das IP-Netzwerk zugreift, den Medienstrom der Multicast-Gruppe zu empfangen, der das Endgerät (200) beizutreten verlangt.

## Revendications

1. Procédé de démarrage d'un service de télévision à protocole Internet, IPTV (Internet Protocol Television), comprenant les étapes consistant à :
envoyer (101), par un terminal, un message de demande de participation basé sur le protocole de gestion de groupe Internet, IGMP (Internet Group Management Protocol), transportant des informations du canal du programme de diffusion multiple, par l'intermédiaire d'une connexion par la liaison physique établie entre le terminal et un équipement d'accès au réseau de couche 2, avant que le terminal n'accède à un réseau IP pour obtenir une adresse IP de réseau allouée et valide pour le terminal, dans lequel l'équipement d'accès au réseau de couche 2 prend en charge le traitement de paquets IGMP et le transfert de données à diffusion multiple ; et
acquérir (102), par le terminal avant que le terminal n'accède au réseau IP, un flux multimédia d'un groupe de diffusion multiple auquel le terminal demande à participer par l'intermédiaire de la connexion par la liaison physique.

2. Procédé de démarrage d'un service IPTV selon la revendication 1, comprenant en outre l'étape consistant à : effectuer, par le terminal, une procédure d'initialisation avant l'envoi du message de demande de participation, dans lequel la procédure d'initialisation comprend l'établissement de la connexion par la liaison physique à l'aide d'une association de liaisons.

3. Procédé de démarrage d'un service IPTV selon les revendications 1 ou 2, dans lequel les informations de canal du programme de diffusion multiple sont des informations du canal du programme de diffusion multiple préenregistrées ayant des propriétés d'autorisation dans le terminal.

4. Procédé de démarrage d'un service IPTV selon les revendications 1 ou 2, dans lequel les informations du canal du programme de diffusion multiple sont acquises par le biais de canaux par défaut préenregistrés dans le terminal.

5. Terminal de télévision sur protocole Internet IPTV, **caractérisé en ce qu'**il comprend :
un module d'interface (10), conçu pour établir une connexion par la liaison physique entre le terminal et un équipement d'accès au réseau de couche 2 à l'aide d'une association de liaisons, dans lequel l'équipement d'accès au réseau de couche 2 prend en charge le traitement de paquets IGMP et le transfert de données à diffusion multiple ; et
un module de démarrage (20), conçu pour envoyer, avant que le terminal n'accède à un réseau IP pour obtenir une adresse IP du réseau allouée et valide pour le terminal, un message de demande de participation basé sur le protocole de gestion de groupe Internet, IGMP, transportant des informations du canal du programme de diffusion multiple, par l'intermédiaire de la connexion par la liaison physique établie par le module d'interface (10) et pour recevoir, à l'aide du module d'interface (10) avant que le terminal n'accède au réseau IP, un flux multimédia d'un groupe de diffusion multiple auquel le terminal demande à participer par l'intermédiaire de la connexion par la liaison physique.

6. Terminal IPTV selon la revendication 5, dans lequel le module de démarrage (20) comprend en outre :
une première unité de stockage (21), conçue pour stocker des informations du canal du programme de diffusion multiple ayant des propriétés d'autorisation ; et
une première unité de communication (22) conçue pour envoyer, avant que le terminal n'accède au réseau IP pour obtenir l'adresse IP du réseau allouée et valide pour le terminal, un message de demande de participation basé sur IGMP, transportant les informations du canal du programme de diffusion multiple, par l'intermédiaire de la connexion par la liaison physique établie par le module d'interface (10) et en fonction des informations du canal du programme de diffusion multiple stockées dans la première unité de stockage (21), et pour recevoir, par le biais du module d'interface (10) avant que le terminal n'accède au réseau IP, le flux multimédia du groupe de diffusion multiple auquel le terminal demande à participer.

7. Terminal IPTV selon la revendication 5, dans lequel le module de démarrage (10) comprend en outre :
une seconde unité de stockage (23), conçue pour stocker des canaux par défaut ;
une unité d'acquisition (24), conçue pour acquérir des informations du canal du programme de diffusion multiple par défaut en fonction des canaux par défaut ; et
une seconde unité de communication (25) conçue pour envoyer, avant que le terminal n'accède au réseau IP pour obtenir l'adresse IP du réseau allouée et valide pour le terminal, un message de demande de participation basé sur IGMP, transportant les informations du canal du programme de diffusion multiple, par l'intermédiaire de la connexion de liaison physique établie par le module d'interface (10) et en fonction des informations du canal du programme de diffusion multiple acquises par l'unité d'acquisition (24), et recevoir, par le biais du module d'interface (10) avant que le terminal n'accède au réseau IP, le flux multimédia du groupe de diffusion multiple auquel le terminal demande à participer.

8. Système de démarrage d'un service de télévision sur protocole Internet, IPTV (Internet Protocol Television), **caractérisé en ce qu'**il comprend :
un terminal (200), conçu pour établir une connexion par la liaison physique à l'aide d'une association de liaisons, pour envoyer, avant que le terminal (200) n'accède à un réseau IP pour obtenir l'adresse IP réseau allouée et valide pour le terminal, un message de demande de participation basé sur le protocole de gestion de groupe Internet, IGMP, transportant des informations du canal du programme de diffusion multiple, par l'intermédiaire de la connexion par la liaison physique, et recevoir, par l'intermédiaire de la connexion par la liaison physique, avant que le terminal (200) n'accède au réseau IP, un flux multimédia d'un groupe de diffusion multiple auquel le terminal (200) demande à participer ;
un serveur source de programme (400), conçu pour stocker des données multimédia de services vidéo ; et
un équipement d'accès au réseau de couche 2 (300), dans lequel le terminal (200) est configuré pour établir la connexion par la liaison physique avec l'équipement d'accès au réseau de couche 2 (300) par l'intermédiaire d'un port du réseau, et l'équipement d'accès au réseau de couche 2 (300) est conçu pour répliquer, en fonction du message de demande de participation basé sur IGMP, le flux multimédia du groupe de diffusion multiple auquel le terminal demande à participer, à partir des données multimédia des services vidéo, et pour envoyer le flux multimédia au terminal (200), dans lequel l'équipement d'accès au réseau de couche 2 (300) prend en charge le traitement de paquets IGMP et le transfert de données à diffusion multiple.

9. Système de démarrage d'un service IPTV selon la revendication 8, dans lequel le terminal (200) comprend en outre :
un module d'interface (10), conçu pour établir la connexion par la liaison physique entre le terminal (200) et un équipement d'accès au réseau de couche 2 (300) à l'aide d'une association de liaisons ; et
un module de démarrage (20), conçu pour envoyer, avant que le terminal (200) n'accède au réseau IP pour obtenir l'adresse IP du réseau allouée et valide pour le terminal, un message de demande de participation basé sur IGMP, transportant les informations du canal du programme de diffusion multiple à l'équipement d'accès au réseau de couche 2 (300), par l'intermédiaire de la connexion par la liaison physique établie par le module d'interface (10), et pour recevoir, par le biais du module d'interface (100) avant que le terminal n'accède au réseau IP, le flux multimédia du groupe de diffusion multiple auquel le terminal (200) demande à participer.
